# EUROPEAN PATENT APPLICATION

(11) **EP 2 572 574 A1**
(43) Date of publication of application: **27.03.2013**
(21) Application number: 11181985.0
(22) Date of filing: 20.09.2011
(51) Int. Cl.: A01K 61/00, A01K 75/00

(54) **Aquaculture net with organic coating in critical zone**

(71) Applicant: NV Bekaert SA, 8550 Zwevegem (BE)
(72) Inventor: Luengo, Alejandro Suazo, Talcahuano (CL); Paredes Montecinos, Hector, Talcahuano (CL)
(74) Representative: Messely, Marc

(57) **Abstract**

An aquaculture net comprising steel wires, whereby the upper part (2) of the net (1) comprises metal wires (5) having an organic coating (6) for protecting against corrosion and/or abrasion. Since the upper part (2) of the net (1) is the most vulnerable part, the organic coating (6) provides a longer life time to the net (1).

## Description

### Technical Field

The invention relates to an aquaculture net with steel wires.

### Background Art

Aquaculture nets or fish-farming nets are used to raise aquatic life such as fish. The aquaculture net keeps the aquatic life controlled and contained and protects the aquatic life inside the net against predators such as sharks, piranhas, nutrias, seals and sea lions.

The dimensions of such an aquaculture net are considerable. An example of a typical dimension is 30m x 30m x 15m, the last dimension being the depth of the net inside the water and the first two dimensions being the width and length of the net at the water surface. A net made of galvanized steel wire and of the above-mentioned dimensions has a weight above 4 metric tonnes.

The aquaculture nets are usually of the chain-link fence type. This is a fence of steel wires woven or braided into a diamond pattern. The meshes have a dimension that is smaller than the dimension of the fish. Each steel wire is preformed by bending so that it exhibits a wavy pattern with maxima and minima. The maxima of a steel wire interlock with the minima of a neighbouring wire to form the patterns of a series of diamonds.

Aquaculture nets of the chain-link fence type have proven to be successful to control the aquatic life and to protect against predators. Aquaculture nets with metal coated steel wires offer an acceptable resistance against bio-fouling, i.e. against fouling organisms such as barnacles, algae or molluscs, which may attach themselves to the wire material of the mesh structure and grow. Indeed this fouling mechanism is so persistent that entire openings in the meshes may be filled blocking any introduction of fresh water or nutrition into the volume inside the mesh structure. Nylon nets, although offering the advantage of a low weight, have much less resistance against fouling.

Despite the huge advantages of strength and antifouling properties attached to metallic nets, the metallic nets now and then fail after a period of time. Investigation of the failing aquaculture nets revealed that particularly the upper steel wires in the aquaculture net were broken. Indeed, the ocean or the sea forms a huge challenge with respect to corrosion-resistance. In addition to this highly corroding environment, the waves and tidings subject the aquaculture net to a continuous and repeated movement. In an aquaculture net of the chain-link fence type, each steel wire must carry the weight of the rest of the net below it. The upper wire makes point contacts with the wire just below it. These point contacts are located at a point where both the upper wire and the wire just below it are subjected to both a bending and a torsion deformation. The continuous and repeated imposed movements in this aggressive environment create fretting at the point contacts. This fretting phenomenon causes a reduction in cross-section, which eventually leads to whole parts of the net which are broken and open.

This is especially the case at high water current velocities and waves with significant wavelength and heights. This situation may lead to critical damage to the net whereby fish escape or predators may enter the net, or even the entire net falling into the water. The most critical zone of the net in this matter is the splash zone, also called critical zone, formed by the upper part or top perimeter of the net. Today, this issue is partially fixed by replacing either the entire damaged area or only the most damaged wires. Intensive monitoring of the critical zone is required. Another known solution is removing the entire damaged upper area, hereby decreasing the volume of the net.

This phenomenon of wire fretting and wire damage in the critical zone particularly occurs in nets of the chain-link fence type where the wires are positioned horizontally. However, the same phenomenon is also noticed in aquaculture nets, whether of the chain-link fence type or not, where the wires are positioned horizontally. The reason is that the upper part of the net carries the lower part and that the upper part is alternatively exposed to air and to sea water.

W02010/027883 describes a corrosion-compensated net with greater material thickness in the upper region of the net and less material in the lower region of the net. A problem however is the need for thicker material in the upper region, which increases the weight of the net.

### Disclosure of Invention

It is an object of the invention to avoid the disadvantages of the prior art.

It is also an object of the invention to provide an aquaculture net with a prolonged life time.

It is an aspect of the present invention to decrease the effect of corrosion and abrasion in the upper metal wires of aquaculture nets and at the same time minimise weight and cost.

According to the present invention, an organic protective coating is disposed on the metal wires in at least the upper or critical part of the net. The coating is preferably applied as an outer protective layer against corrosion and/or abrasion. The coating can be applied by means of an extrusion technique. The metal wire inside the protective coating may be a steel wire and be provided further with metallic coatings for resistance against corrosion and/or fouling.

Two embodiments are possible.
In a first embodiment, the upper part and the lower part of the net comprises the same metallic wiring. The only difference is that the metal wires of the upper part are provided with an external organic top coating. An example are stainless steel wires with a copper nickel alloy coating for the lower part and stainless steel wires with a copper nickel alloy coating and an organic coating for the upper part.
In a second embodiment, the lower part of the net comprises metal wires where the surface has anti-fouling properties and the upper part of the net comprises metal wires where the surface has anti-corrosion properties. An example are stainless steel wires with a copper nickel alloy coating for the lower part and stainless steel wires with an organic coating for the upper part.

An advantage of the invention is that the organic coating protects the wire against damage due to corrosion and/or abrasion, thereby increasing the lifetime of the steel wire by preventing earlier corrosion and/or abrasion of the steel wire inside the coating. The metal part provides for the strength of the net.

Other advantages include, no or less extra weight of material, and less monitoring needed of possible damage to the upper part of the net.

According to the invention, the upper part of the net is provided with an organic coating. It is known that nets out of organic material or with an organic coating are more vulnerable to fouling than metal nets or nets where metal is at the surface. However, this drawback of the present invention is within easy control, since it is only the upper part of the net which is provided with an organic coating. Indeed, the critical zone area (splash zone), being the upper area of the net, is easy to clean by means of brushes e.g., because this area is closest to the surface and can still be reached from the surface.

In a specific embodiment the organic coating may have antifouling properties, e.g. being doped medicines with bacteria killing properties.

Compared to the prior art of W02010/027883 the steel wires in upper and lower region may have about the same thickness, thus not leading to extra weight.

In a specific embodiment the aquaculture net is a chain-link fence.

The height of the upper part or critical zone of the net ranges from 0.20 m to 10.0 m, more preferably 0.20m to 5.0 m

The aquaculture net according to the invention preferably provides an organic coating selected from a polymer of the group consisting of high-density polyethylene, polyester or polyvinylchloride. Other suitable organic coatings are those resistant to corrosion and/or abrasion.
Within the context of the present invention, the terms "polyester" denote not only polyethylene terephtalate or homopolymers of ethylene terephthalate but also copolymers of ethylene terephthalate containing not more than 20% of other copolymerized units, e.g. derived from other acids than terephthalic acid, such as isophtalic acid or from other glycols than ethylene glycol. The polymer may also contain mixtures of polymers in order to modify certain of the properties thereof.

In a preferred embodiment the metal wires are stainless steel wires.

In yet a more preferred embodiment the steel wires comprise a metallic coating selected from the group consisting of zinc, zinc aluminium alloy, zinc aluminium magnesium alloy and copper alloy.

In a specifically preferred embodiment the steel wires comprise a Cu/Ni cladding with more than 80% copper and between 5% and 15% nickel. The copper gives the anti-fouling mechanism and the nickel adds to the corrosion resistance. Other suitable metal coatings are CuNiSn, CuZnSn and CuZnNi.

In a favourable embodiment the steel wires have a diameter ranging from 1.80 mm to 4.50 mm, e.g. from 2.0 mm to 4.0 mm. The steel wires have a tensile strength greater than 1500 MPa, preferably greater than 1700 MPa.

### Brief Description of Drawings

Figure 1 shows an embodiment of an aquaculture net with organic coating on the wires of the critical zone.

Figure 2a shows a cross section of a wire used in the lower part of an acquaculture net and Figure 2b shows a cross-section of a wire used in the critical zone of an aquaculture net according to the invention.

### Description of Preferred Embodiments

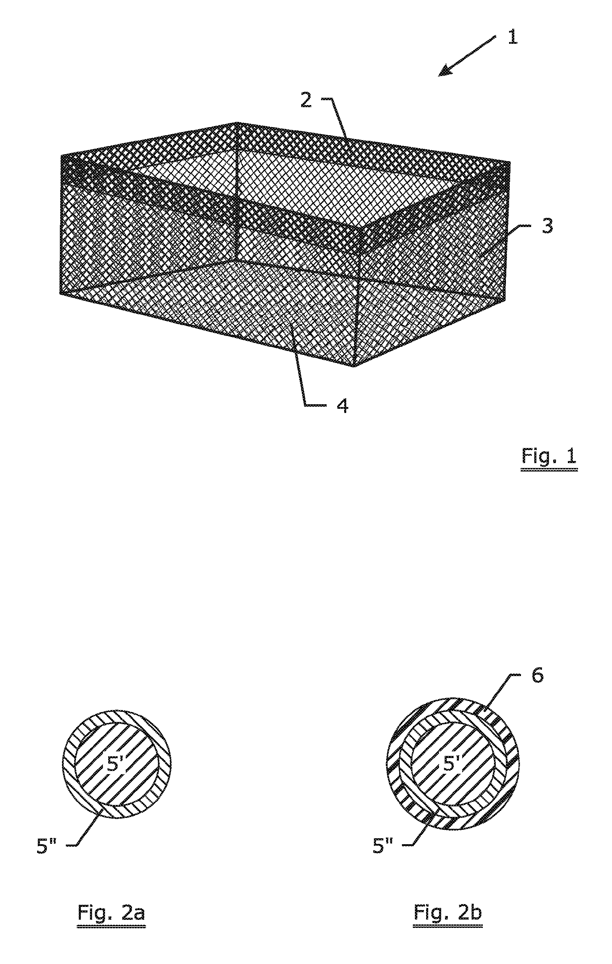

Figure 1 illustrates a square embodiment of an aquaculture net 1 as described by the present invention. The net comprises an upper part 2 and a lower part 3 attached to the upper part 2 and forming together the walls of the net. The net further comprises a bottom netting 4.

The net 1 can be made of various chain-link fences of steel wires, e.g. stainless steel wires where the steel wires are provided with a corrosion-resistant coating and/or an antifouling coating. Alternatively, the wires may be bulk CuNi alloys.

The critical zone at the upper part 2 of net 1, has a height from 0.20 m up to 5.0 m, depending on the depth of the net and upon the environment where the net is to be used. Highly challenging environments, e.g. places in the ocean where large waves, heavy winds and tidings, increase the height (or depth) of the critical zone. The wires in this zone are provided with an organic coating. The organic coating may be provided by means of an extrusion technique.

Figure 2a shows a cross section of a steel wire 5 used in the lower part of the net. Steel wire 5 has a stainless steel core 5' and a copper-nickel alloy coating 5".
Figure 2b shows a cross-section of a steel wire 5 used in the upper part of net 1, the critical zone 2. The steel wire 5 has a stainless steel core 5', a copper-nickel alloy coating 5" and an external layer 6. The external layer is an organic coating 6.

## Claims

1. An aquaculture net comprising metal wires, said net (1) having an upper part (2) and a lower part (3) being attached to the upper part and forming a net wall, **characterized in that** said upper part (2) comprises metal wires (5) having an external organic coating (6).

2. An aquaculture net according to claim 1, wherein said aquaculture net (1) is a chain-link fence.

3. An aquaculture net according to claim 1 or 2, wherein said upper part (2) has a height ranging from 0.20 m to 5.0 m.

4. An aquaculture net according to any one of the preceding claims, wherein said metal wires (5) have an organic coating (6) selected from the group consisting of high-density polyethylene, polyester or polyvinylchloride.

5. An aquaculture net according to any one of the preceding claims, wherein said organic coating (6) has antifouling properties.

6. An aquaculture net according to any one of the preceding claims, wherein said metal wires (5) are steel wires and comprise a metallic coating selected from the group consisting of zinc, zinc aluminium alloy, zinc aluminium magnesium alloy and copper alloy.

7. An aquaculture net according to claim 6, wherein said steel wires 5 comprise a Cu/Ni coating.

8. An aquaculture net according to any one of the claims 6 to 7, wherein said steel wires are stainless steel wires.

9. An aquaculture net according to any one of claims 6 to 8, wherein said steel wires (5) have a tensile strength greater than 600 MPa, preferably greater than 1000 MPa.
